# EUROPÄISCHE PATENTSCHRIFT

(11) **EP 0 522 336 B1**
(45) Veröffentlichungstag und Bekanntmachung des Hinweises auf die Patenterteilung: **01.03.1995**
(21) Anmeldenummer: 92110450.1
(22) Anmeldetag: 20.06.1992
(51) Int. Cl.: F03B 1/02

(54) **Pelton-Laufrad und dessen Herstellung**
Rotor for pelton turbine and manufacture of same
Rotor de turbine pelton et sa fabrication

(30) Priorität: 12.07.1991 CH 2080/91
(43) Veröffentlichungstag der Anmeldung: 13.01.1993
(73) Patentinhaber: Sulzer-Escher Wyss AG, CH-8023 Zürich (CH)
(72) Erfinder: Angehrn, Richard, CH-8180 Bülach (CH); Schneebeli, Fritz, CH-8102 Oberengstringen (CH)
(74) Vertreter: Hammer, Bruno, Dr.

(56) Entgegenhaltungen:
- FR-A- 1 014 783
- GB-A- 715 858
- PATENT ABSTRACTS OF JAPAN, Band 10, Nr. 14 (M-447)(2071), 21. Januar 1986;& JP-A-60 175 772 (FUJI DENKI SEIZO K.K.) 09-09-1985

## Beschreibung

Die Erfindung betrifft ein Laufrad einer Pelton-Wasserturbine mit einer Vielzahl von am Aussenrand einer Radscheibe angeordneten Bechern, sowie ein Verfahren zu dessen Herstellung.

Wasserturbinen dieser Art sind aus einer Vielzahl von Publikationen bekannt, beispielsweise aus U.S. Patent No. 233 692 von Lester A. Pelton.

Die Laufräder solcher Pelton-Turbinen werden heute meist als integrale Gussteile aus einem geeigneten Gussstahl hergestellt und anschliessend durch Materialabtragung in die vorgesehene Form gebracht.

Die Fertigstellung eines solchen Pelton-Rades erfordert jedoch einen erheblichen Bearbeitungsaufwand an einem grossen Werkstück mit einem Durchmesser von mehreren Metern. Ein derart gefertigtes Pelton-Rad weist zudem kritische Spannungen an der Schaufelwurzelzone hinter der Mittelschneide des Bechers auf, die sich bisher kaum beseitigen liessen. Eine zerstörungsfreie Prüfung des Laufrades in der Wurzelzone auf Risse oder dergleichen war nach Fertigstellung des Kranzes bisher infolge der schlechten Zugänglichkeit schwierig, und eine sicherheitstechnische Ueberwachung während des Laufes war praktisch unmöglich. Daher war eine periodische Inspektion im Stillstand in relativ kurzen Zeitintervallen erforderlich. Das Entstehen von Radbrüchen konnte dadurch nicht immer verhindert werden.

Die Erfindung setzt sich die Aufgabe, die angeführten Nachteile des Standes der Technik zu beseitigen und ein Pelton-Laufrad zu schaffen, welches mit geringerem Arbeitsaufwand herstellbar ist, welches kritische Materialbeanspruchungen durch einen günstigeren Eigenspannungsaufbau vermeidet und welches eine verbesserte zerstörungsfreie Prüfbarkeit nach Fertigstellung des Laufrades und eine sicherheitstechnische Ueberwachung zur Erkennung von Ermüdungsschäden und zur Vermeidung von Radbrüchen gestattet.

Erfindungsgemäss wird diese Aufgabe dadurch gelöst, dass die einzelnen Becher an ihren Wurzeln zu einem ringförmigen Kranz verschweisst sind und der Kranz an seiner Innenseite mit ringförmigen Schweissnähten mit dem Aussenrand der Radscheibe verschweisst ist, wobei zwei ringförmige Schweissnähte in Achsenrichtung nebeneinander vorgesehen sind, welche einen abgeschlossenen toroidförmigen Ringraum am Aussenrand der Radscheibe bilden.

Mit Vorteil erfolgt der Aufbau des Kranzes von den Becherwurzeln aus nach innen durch formgebendes Auftragsschweissen bis zur Position der Schweissnähte mit dem Aussenrand der Radscheibe.

Besonders vorteilhaft ist hierbei, dass durch die zwei in Achsenrichtung nebeneinander angeordneten ringförmigen Schweissnähte an dem die Becherwurzeln verbindenden Kranz bzw. dem Aussenrand der Radscheibe ein abgeschlossener toroidförmigen Ringraum gebildet wird. Durch Füllung des Ringraumes mit einem Fluid mit anderem Druck und Ueberwachung des Fluiddruckes im ringförmigen Hohlraum kann ein Ermüdungsriss bereits vor einem Bruch signalisiert und durch den Ort des Fluidaustrittes lokalisiert werden.

Die Erfindung wird anhand der in den Figuren dargestellten Ausführungsbeispiele näher erläutert. Es zeigen:

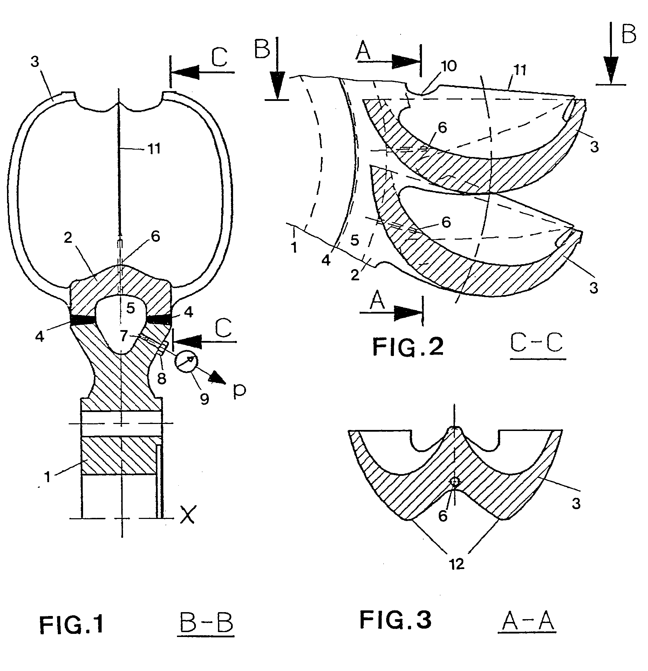

- Fig. 1: ein Pelton-Laufrad im Axialschnitt in der Ebene B-B,
- Fig. 2: einen Schnitt in der Ebene C-C durch mehrere Becher senkrecht zur Achse, und
- Fig. 3: einen Querschnitt durch einen Becher in der Ebene A-A parallel zur Achse.

Das in den Figuren dargestellte Laufrad einer Pelton-Wasserturbine besteht aus einer Radscheibe 1, die um eine Rotationsachse X drehbar ist, und die an ihrem Aussenrand eine Vielzahl von becherförmigen Schaufeln 3 trägt. Die Schaufeln 3 sind als Doppelbecher mit einer Mittelschneide 11 und steifen Becherrückenrippen 12 versehen, wobei die Mittelschneiden 11 an der Schaufelwurzelzone eine Hohlkehle 10 aufweisen. Das Laufrad ist abweichend von der bisher üblichen integralen Stahlguss-Ausführung, in einer Schweisskonstruktion in mehreren Schritten hergestellt.

Im ersten Schritt werden die einzeln hergestellten becherförmigen Schaufeln 3 an ihren Wurzeln mit Schweissnähten zu einem Kranz zusammengeschweisst. Anschliessend wird durch formgebendes Auftragsschweissen sukzessive ein Ring 2 aufgebaut und durch Auftragen einer Anzahl von Lagen auf die Innenseite zu der endgültigen Form gestaltet, entsprechend der Aussenfläche der Radscheibe 1, die als Stahlgussteil ausgeführt sein kann.

In einem weiteren Schritt wird nun der Schaufelring 2 mit seiner Innenseite mit Kreisringnähten 4 an die Aussenseite der Radscheibe 1 angeschweisst und zum fertigen Laufrad zusammengesetzt.

Dabei ist es von besonderem Vorteil, die Innenpartie des Ringes 2 sowie die entsprechende Aussenpartie der Radscheibe 1 so zu gestalten, dass zwei parallele, in Achsenrichtung X etwas versetzte Kreisringnähte 4 symmetrisch zu den Becherschneiden 11 vorgesehen sind.

Beim Zusammenschweissen des Ringes mit der Radscheibe 1 an diesen zwei Kreisringnähten 4 entsteht somit ein geschlossener toroidförmiger Ringraum 5.

Die Vorteile dieser Konstruktion sind, abgesehen vom geringeren Schweissvolumen und einer weniger aufwendigen Bearbeitung, die Entlastung der kritischen Schaufelwurzelzone bei der Hohlkehle 10 hinter der Mittelschneide 11 des Bechers, wodurch eine Reduktion der maximalen Becherspannung erreicht wird. Der Kraftfluss infolge Fliehkraft- und Wasserstrahlbeanspruchung wird von der Mittelebene des Bechers in die zwei seitlichen Ebenen C-C mit den steifen Becherrückenrippen 12 verlagert, wodurch ein ausgeglicheneres Spannungsniveau in der am höchsten beanspruchten Becherwurzelebene A-A entsteht. Durch die Schweisskonstruktion wird ein günstigerer Eigenspannungsaufbau erreicht, wobei die kritischen Stellen unter Druckvorspannung gesetzt werden. Die beschriebene Schweisskonstruktion weist eine niedrigere Spannungsbeanspruchung auf als vorbekannte Stahlgusskonstruktionen.

Von besonderem Vorteil ist es, dass der durch die Schweisskonstruktion entstandene ringförmige Hohlraum 5 zur sicherheitstechnischen Ueberwachung und zur frühzeitigen Signalisation von Ermüdungsschäden im Laufrad benutzt werden kann. Dadurch können die bei vorbekannten Pelton-Rädern gelegentlich aufgetretenen Becherbrüche, die in der Regel Grossschäden mit Lebensgefahr hervorrufen, mit grosser Sicherheit verhindert werden.

Hierzu wird der ringförmige Hohlraum 5 durch eine Bohrung 7 mit einem geeigneten Fluid, d.h. Flüssigkeit, Gas, Dampf oder Luft mit einem von der Aussenatmosphäre verschiedenen Druck, z.B. mit einer korrosionspassiven, nicht allzu viskosen Flüssigkeit gefüllt und unter Ueberdruck gesetzt. Darauf wird der Raum mit einer Schraube 8 druckfest verschlossen. Mit einem in der Schraube 8 integrierten Sensor 9 kann der Druck p im Hohlraum überwacht werden. Sollte der Druck durch ein Leck infolge eines Anrisses absinken, wird ein Notsignal ausgelöst und die Maschine abgestellt. Hierzu wird die Erfahrung ausgenützt, dass vor einem endgültigen Bruch mit einem Leck infolge Ermüdungsrissen gerechnet werden kann. Solche feinen Ermüdungsrisse können auf die beschriebene Weise während des Betriebes kontinuierlich durch den eintretenden Druckabfall signalisiert werden. Der Ort des Ermüdungsrisses kann leicht durch Nachpumpen von Flüssigkeit in den Hohlraum 5 lokalisiert werden. Hierbei ist es von Vorteil, eine eingefärbte Flüssigkeit zu verwenden.

Um die Becherwurzelzone in die Ueberwachung einzuschliessen, sind feine radiale Sacklochbohrungen 6 vom Hohlraum 5 aus erforderlich, welche etwas über die Ebene A-A hinausreichen. Diese sind unschädlich, wenn sie im Bereich des Flächenschwerpunktes vom Schnitt A-A angebracht sind.

Zur Signalübertragung kann ein Kabel vom Drucksensor 9 aus vom Rad auf die Welle zur Lagerstelle geführt werden. Von dort ist eine berührungslose Signalübertragung leicht zu realisieren.

Bei einer alternativen Ausführung kann der Hohlraum 5 anstatt unter Ueberdruck auch unter Vakuum oder Teilvakuum gesetzt werden. Auch hier wird der Unterdruck p mittels des Drucksensors 9 überwacht und bei einer Beeinträchtigung des Vakuums ein Notsignal ausgelöst.

Der Vorteil liegt in beiden Fällen darin, dass mittels eines einzigen Signales das Laufrad integral dauernd und mit grosser Sicherheit während des Betriebes überwacht werden kann. Damit können die sonst nötigen kurzen Inspektionsintervalle markant vergrössert werden, so dass sich die Wartungskosten und Stillstandszeiten des mit einem solchen überwachten Laufrad ausgerüsteten Wasserkraftwerkes erheblich reduzieren lassen.

Der Vorteil des geschlossenen Hohlraumes 5 zur Rissüberwachung lässt sich auch unabhängig von der beschriebenen Herstellweise des Schaufelkranzes 2 durch Auftragsschweissen nutzen.

## Patentansprüche

1. Laufrad einer Pelton-Wasserturbine mit einer Vielzahl von an einer Radscheibe (1) angeordneten Bechern (3), dadurch gekennzeichnet, dass die einzelnen Becher (3) an ihren Wurzeln zu einem ringförmigen Kranz (2) verschweisst sind und der Kranz (2) an seiner Innenseite mit ringförmigen Schweissnähten (4) mit dem Aussenrand der Radscheibe (1) verschweisst ist, wobei zwei ringförmige Schweissnähte (4) in Achsenrichtung nebeneinander zur Verbindung des Kranzes (2) mit der Radscheibe (1) vorgesehen sind, welche einen abgeschlossenen toroidförmigen Ringraum (5) am Aussenrand der Radscheibe (1) bilden.

2. Laufrad nach Anspruch 1, dadurch gekennzeichnet, dass der Ringraum (5) mit einem Fluid gefüllt ist, welches unter einem von der Aussenatmosphäre verschiedenen Druck steht.

3. Laufrad nach Anspruch 2, dadurch gekennzeichnet, dass der Ringraum (5) mit einem Drucksensor (9) versehen ist, welcher bei einer Druckänderung im Ringraum (5) ein Notsignal auslöst.

4. Laufrad nach Anspruch 2 oder 3, dadurch gekennzeichnet, dass der Ringraum (5) mit einer eingefärbten Flüssigkeit unter Ueberdruck gefüllt ist.

5. Laufrad nach Anspruch 2 oder 3, dadurch gekennzeichnet, dass der Ringraum (5) unter Unterdruck steht und mit einem Drucksensor (9) versehen ist, welcher bei einer Beeinträchtigung des Unterdruckes ein Notsignal auslöst.

6. Verfahren zur Herstellung eines Laufrades gemäss einem der Ansprüche 1 - 5, gekennzeichnet durch die Verfahrensschritte, dass
a. die einzeln hergestellten Becher (3) an ihren Wurzeln zu einem Kranz zusammengeschweisst werden,
b. der Kranz an seiner Innenseite durch formgebendes Auftragsschweissen in einer Anzahl von Lagen zu einem Ring (2) ausgestaltet wird, und dass
c. der Ring (2) mit seiner Innenseite mit zwei in Achsenrichtung (X) nebeneinanderliegenden Kreisringnähten (4) an die Aussenseite der Radscheibe (1) in solcher Art angeschweisst wird, dass zwischen Ring (2) und Laufrad (1) ein geschlossener Ringraum (5) entsteht.

## Claims

1. Runner of a Pelton water turbine comprising a plurality of buckets (3) arranged on a runner disk (1), characterised in that the individual buckets (3) are at their roots welded to a ring-shaped collar (2) and the collar (2) is at its inner side welded by circular welds (4) to the periphery of the runner disk (1), wherein two circular welds (4) situated next to each other in axial direction are provided for the connection of the collar (2) to the runner disk (1), which form a closed toroidal annular space (5) on the periphery of the runner disk (1).

2. Runner according to claim 1, characterised in that the annular space (5) is filled with a fluid which is under pressure other than atmospheric pressure.

3. Runner according to claim 2, characterised in that the annular space (5) is provided with a pressure sensor (9) which gives an emergency signal when the pressure in the annular space (5) changes.

4. Runner according to claim 2 or 3, characterised in that the annular space (5) is filled with a coloured liquid under pressure above atmospheric pressure.

5. Runner according to claim 2 or 3, characterised in that the annular space (5) is under reduced pressure, i.e. pressure below atmospheric pressure, and is provided with a pressure sensor (9) which gives an emergency signal when the reduced pressure changes.

6. A process for the manufacture of a runner according to any one of claims 1 to 5, characterised by the following process steps:
a) that the individually produced buckets (3) are at their roots welded to a collar,
b) that the collar is at its inner side by shape-giving build-up welding in a number of layers shaped to a ring (2), and
c) that the ring (2) is at its inner side welded by two circular welds (4) situated next to each other in axial direction (X) onto the outer side of the runner disk (1) in such a way that a closed annular space (5) is formed between the ring (2) and the runner disk (1).

## Revendications

1. Rotor d'une turbine à eau Pelton équipée de multiples godets (3) disposés sur un disque de roue (1), caractérisé en ce que les racines des godets individuels (3) sont soudés de manière qu'ils forment une couronne annulaire (2) et le côté intérieur de la couronne (2) est soudé par des joints annulaires de soudure (4) sur le bord extérieur du disque (1) de la roue, deux joints annulaires de soudure (4) étant prévus en juxtaposition dans la direction de l'axe pour assembler la couronne (2) avec le disque (1) de la roue et formant un espace annulaire toroïdal fermé (5) sur le bord extérieur du disque (1) de la roue.

2. Rotor selon la revendication 1, caractérisé en ce que l'espace annulaire (5) est rempli d'un fluide qui est sous une pression différente de celle de l'atmosphère extérieure.

3. Rotor selon la revendication 2, caractérisé en ce que l'espace annulaire (5) est équipé d'un capteur de pression (9) qui déclenche un signal d'urgence en cas de variation de pression dans l'espace annulaire (5).

4. Rotor selon la revendication 2 ou 3, caractérisé en ce que l'espace annulaire (5) est rempli d'un liquide coloré qui est sous pression supérieure à celle de l'atmosphère.

5. Rotor selon la revendication 2 ou 3, caractérisé en ce que l'espace annulaire (5) est sous dépression et il est équipé d'un capteur de pression (9) qui déclenche un signal d'urgence en cas d'amoindrissement de la dépression.

6. Procédé de réalisation d'un rotor selon l'une des revendications 1 à 5, caractérisé par les étapes consistant à
a. assembler par soudage les pieds des godets (3) réalisés individuellement, de manière à former une couronne,
b. conformer le côté intérieur de la couronne par façonnage par apport de matière de soudage en plusieurs couches de manière à former un anneau (2) et
c. rapporter par soudure le côté intérieur de l'anneau (2) sur le côté extérieur du disque (1) de la roue à l'aide de deux joints annulaires (4) juxtaposés dans la direction de l'axe X de manière à former un espace annulaire fermé (5) entre l'anneau (2) et le disque de la roue (1).
